# EUROPEAN PATENT SPECIFICATION

(11) **EP 1 738 655 B1**
(45) Date of publication and mention of the grant of the patent: **24.08.2011**
(21) Application number: 06013085.3
(22) Date of filing: 26.06.2006
(51) Int. Cl.: A23K 1/00, A23K 1/18, A23L 1/0532

(54) **Gelified feed for animals, and method of production**
Geliertes Tierfuttermittel, und Herstellungsverfahren
Aliment gélifié pour animaux et procédé de préparation

(30) Priority: 28.06.2005 IT ud20050108
(43) Date of publication of application: 03.01.2007
(73) Proprietor: Viten S.R.L., 33100 Udine (IT)
(72) Inventor: Bazzaro, Gianni, 33100 Udine (IT); Bastianutti, Luciano, 33100 Udine (IT)
(74) Representative: D'Agostini, Giovanni

(56) References cited:
- WO-A-98/47392
- DE-U1- 29 722 296
- FR-A- 2 870 088
- US-A- 5 217 740
- US-B1- 6 303 175
- US-B2- 6 753 004
- PATENT ABSTRACTS OF JAPAN vol. 2000, no. 16, 8 May 2001 (2001-05-08) & JP 2001 008640 A (KYODO SHIRYO KK), 16 January 2001 (2001-01-16)

## Description

### Object

This invention has as its object feed for animals and a method for its production, as defined by the claims.

### Domain of the invention

The main domain, although not limitative, is that for the feeding of pets and/or domestic and/or working animals such as e.g. birds, fish, hamsters, reptiles, horses, cats and dogs, etc. but also zoo animals or other.

A non-limitative list of beneficiaries such as small pets form part of the following groups:
- large and medium-sized parrots (Lori, Ara, Amazonian, Cockatoo and similar);
- small rodents and lagomorphs (hamsters, guinea-pigs, rabbits and similar);
- other birds whose diet is mainly based on sugary substances;
- aquarium fish;
- reptiles (Testudinates, in particular tortoises and fresh-water turtles; Squamata, in particular lizards and iguanids).
Other animals that can benefit from such feed can be the most varied like for example:
- dogs;
- cats;
- horses;
- working animals, including for example elephants;
- fish also of large sizes such as dolphins and orcas in aquariums,
- etc.

### Background art

In the present state of the art, said types of feed are known which can be in a loose or solid form also for example in the form of other animals of the food chain. Eg.: DE29722296, US-B1-6303175, JP-PAT.ABSTRACT VOL.2000. N°16 May 2001 & JP2001 008640, US-B2-6753004, WO 98/47392, US-A-5217740.

In more detail, the products for example for pets and/or working animals can mainly consist of pelleted or extruded mixtures of seeds and feeding stuffs, to be used on their own or together with fruit and/or vegetables and/or flaked cereals. Such a habit in the long term, can bring about undesired phenomena, such as:
- deficiency of a foodstuff, since a mono-product cannot ensure the same nutritional intake of a diet equivalent to that consumed by the animal in freedom;
- excess of a single type of nourishment if the animal can choose the most palatable ingredient, see for example seed mixtures in which oil seeds are ingested before the others and until repletion;
- a continuous and consistent commitment by the breeder or owner of the animal, obliged to prepare fruit and/or vegetables daily to be added to the basic diet;
- the low percentage of water in feed for reptiles (generally less than 13%), which may bring on slow dehydrating phenomena in the animal, which is difficult to diagnose in time to intervene to rehydrate it correctly;
- the difficulty in feeding fish in a balanced way in periods of absence of the owner during weekends or holidays.
Also the distribution of particular nutrients (for example vitamins, amino acids, oligo-elements, digestible fibres, oligo-saccharides, etc) can be inconstant, with negative effects on the health of the animal which can manifest themselves even a long time after the deficiency or excess, when, by that time, it is too late to intervene.

### Aim of this invention and problem to be solved

A main aim of this invention is that of avoiding the abovementioned disadvantages.
An additional aim of this invention is that of making the feed more appetizing to the animal.
A further and non-negligible aim of this invention is that of producing a universal feed, namely usable by all or almost all of the aforementioned animals, independently of their size (small or big) and their use (pets, working, etc.).

### Solution of the problem and inventive characteristics

The problem is solved with the characteristics of the main claim. The sub-claims refer to preferred solutions.

### Advantages

As the product is in the form of gel with a high water content, to be administered as a complementary feed (commonly defined as a "treat" or "snack"), as well as its easily applicable or mouldable shape, the advantages are evident:
- the particular ability of the product to include the most diverse substances in a highly appetizing matrix allows to redress every deficiency or excess of nutrients deriving from daily diets;
- the possibility to modify the percentages of nutritious substances within a very wide range of values transforms the product into an essential complementary feed in order to obtain the optimal well-being of the subjects.
- the strong presence of water, incorporated in the gelatinous matrix, makes consumption of the product more agreeable and slows down the dangerous processes of slow dehydrating in more delicate subjects;
- the gel product remains compact and stable until its complete consumption by the animal, releasing at the same time only the part of the food ingested at that moment.
The product therefore is able to be used in any convenient form, also for big animals (e.g. for horses, elephants, dolphins or orcas etc, like lumps or the shapes of small animals, to substitute the traditional sugars, etc.) - So for example, for the dolphin or whale in an aquarium, the product will be provided in the shape of a fish. For the elephant, the shape of a vegetable; for the cat, the shape of a mouse or bird etc.
Moreover, the shape of the product is important for the animal, for example an elephant could be interested in a sweet, but certainly it will be attracted by the shape of a corn-cob (vegetable), therefore a fruit.

### Detailed description of the invention

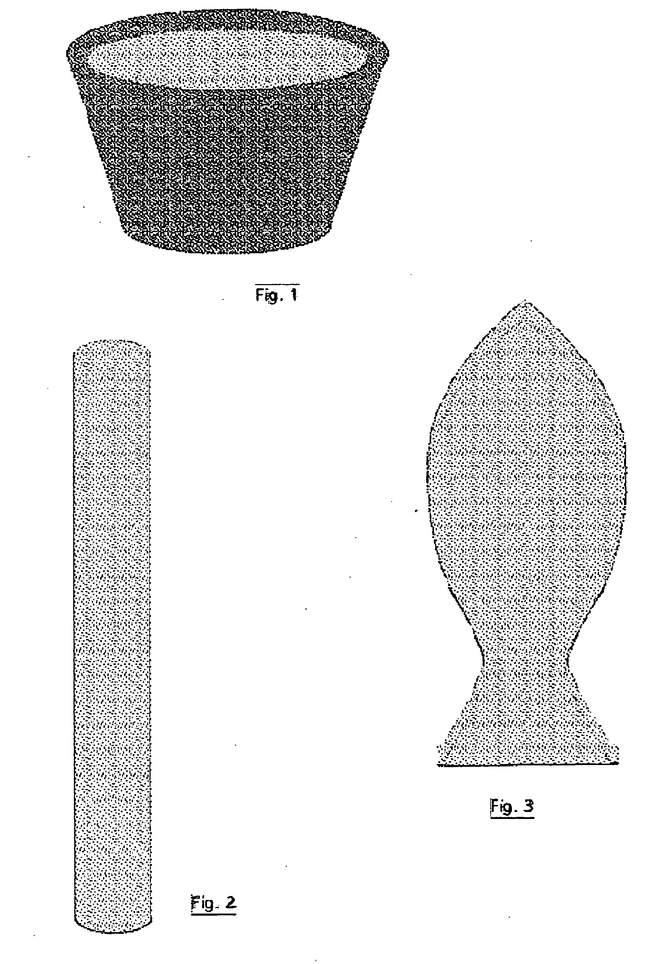

The invention, which is defined by the claims, will now be better described and understood with the help of the enclosed illustrative figures where Figs.1,2,3 represent a non-limited example of the shapes the feed can assume.

### Preparation

i) The primary ingredients are mixed with a certain quantity of water and are heated at least to boiling point, for at least 1-3 minutes;
ii) after having stopped the heating, some secondary ingredients are added, mixing everything together;
   finally,
iii) when the temperature falls to around 80-60 °C, the most thermolabile ingredients are added (e.g.: vitamins) and/or medicinal principles, and it is mixed until homogenous;
iv) When hot, the product is then poured into moulds or containers of varying nature (these too can be edibile), from which, after a suitable stabilization period, they can be extracted and served as such, or divided on the basis of the quantities deemed necessary or suitable to the animal to be fed.

### Average composition of the product:

| Ingredient | % |
|---|---|
| Process and stabilizing water | q.s. to 100 |
| Simple and complex carbohydrates | 35-65 |
| Gel base namely polysaccharide Agar-Agar | 3-15 |
| Dehydrated and/or lyophilized fruit | 0.01 -10 |
| Dehydrated and/or lyophilized vegetables | 0.01-10 |
| Walnuts, hazelnuts and similar | 0.01-12 |
| Starchy and/or oily seeds | 0.01-15 |
| Other substances of vegetable origin, fresh or dehydrated | 0.01-8 |
| Clays and other mineral substances | 0.5-18 |
| Vegetable and/or animal protein concentrates | 1-10 |
| Pelletted and/or extruded and/or granulated food | 0.5-15 |
| Preservatives (EC additives) | 0.01-1 |
| Colourings (EC additives) | 0.01-1 |
| Vitamin and/or mineral premixes | 0.1-5 |
| Vegetable and/or animal oils and fats | 0.01-7 |
| Raw and/or baked and/or toasted cereals and their derivatives | 0.1-10 |

### Average analytic characteristics on the basic product:

| Parameter | UM | Quantity |
|---|---|---|
| Moisture | % | 15-40 |
| Proteins | % | 1-30 |
| Fats | % | 1-15 |
| Minerals | % | 0.5-18 |
| Carbohydrates | % | 30-70 |

In particular, it is to be noted that the addition of minerals, vitamins, oligo-elements, amino acids and other nutrients can vary for each type of product and for the different species of animals concerned.

The composition and the preparation of the gel is as follows:

The base material of the gel ("gel base" in the above table) is a powdered polysaccharide Agar-Agar with the addition of sugar, water and preservative additives such as potassium sorbate (E202) and sodium propionate.

The collateral preparation process is the following:
- a mixture of one part (e.g.50%-80%) of Agar-Agar + one part of the sugar total (e.g. the same percent or more or less) is prepared and preferably hot water is added, mixing to give a liquid solution, then
- additives and preservatives are added and it is brought to a light boil for a short time, preferably for 1-3 minutes;
- it is left to decrease in temperature and
- the remaining part of the formula is added, keeping the product heated between 60-80 degrees centigrade to obtain at first, a creamy solution, and then a doughy solution in the form of gel.

This gel is used in the abovementioned formulation and process. Advantageously in the product aromas are added for example apple, orange, citrus fruit, fresh meat, fish, etc.
Also preferably flavour enhancers, or flavourings are added like for example plant substances, fruit, meat, fish, etc.

## Claims

1. Method for the production of feed for animals in the form of solidified Agar-Agar base gel in a certain shaped object of nourishment **CHARACTERISED IN THAT** it comprises the following steps:
i) preparation of the gel:
- a mixture of 3-1 5%pp of gel base polysaccharide Agar-Agar and 35-65%pp part of simple and complex carbohydrate is prepared and water is added, mixing to a liquid solution,
- additives and preservatives are added and it is brought at least to boiling point, for at least 1-3 minutes;
- the temperature is left to decrease to 80-60°C and
- the remaining part of the formula is added keeping everything heated at a temperature between about 60-80°C to obtain a creamy solution in the form of gel.
ii) preparation of the feed product:
- vegetable and/or animal formulation substances and mineral substance are added to form a mouldable mixture;
iii) the product is measured out/poured/moulded to obtain it in a solid shape of the object or animal or vegetable or fruit desired.
iv) the method being further **characterised in that**:
o said mineral substance is clay in the proportion of 0.5-18%pp;
o said vegetable and/or animal formulation substances are concentrates in the proportion of 1-10%pp.

2. Feed for animals obtainable according to a method of claim 1 , **characterised in that** said preserving substance includes potassium sorbate.

3. Feed for animals obtained according to a method of claim 1, **characterised in that** said preserving substance includes sodium propionate.

4. Feed for animals obtained according to a method of claim 1, **characterised in that** it includes the following average composition formulation of the product:
| Ingredient | % |
|---|---|
| Process and stabilizing water | q.s. to 100 |
| Simple and complex carbohydrates | 35-65 |
| Gel base namely polysaccharide Agar-Agar | 3-15 |
| Dehydrated and/or lyophilized fruit | 0.01-10 |
| Dehydrated and/or lyophilized vegetables | 0.01-10 |
| Walnuts, hazelnuts and similar | 0.01-12 |
| Starchy and/or oily seeds | 0.01-15 |
| Other substances of vegetable origin, fresh or dehydrated | 0.01-8 |
| Clay and other mineral substances | 0.5-18 |
| Vegetable and/or animal protein concentrates | 1-10 |
| Pelletted and/or extruded and/or granulated food | 0.5-15 |
| Preservatives (EC additives) | 0.01-1 |
| Colourings (EC additives) | 0.01-1 |
| Vitamin and/or mineral premixes | 0.1-5 |
| Vegetable and/or animal oils and fats | 0.01-7 |
| Raw and/or baked and/or toasted cereals and their derivatives | 0.1-10 |
- and in order to obtain the following parameters:
| Parameter | UM | Quantity |
|---|---|---|
| Moisture | % | 15-40 |
| Proteins | % | 1-30 |
| Fats | % | 1-1 5 |
| Minerals | % | 0.5-18 |
| Carbohydrates | % | 30-70 |

## Patentansprüche

1. Verfahren zur Herstellung von Tierfutter in Form von erstarrtem Agar-Agar-Basisgel in einem auf eine gewisse Weise geformten Nahrungsmittel, **gekennzeichnet dadurch, dass** es die folgenden Phasen umfasst:
i) Herstellung des Gels:
- eine Mischung von 3-15%pp Gelbasis-Polysaccharid-Agar-Agar und 35-65%pp einfaches und komplexes Kohlenhydrat wird zubereitet und Wasser wird hinzugegeben und alles zu einer flüssigen Lösung gemischt,
- Zusätze und Konservierungsstoffe werden hinzugegeben, und es wird mindestens auf den Siedepunkt gebracht, mindestens 1-3 Minuten lang:
- die Temperatur wird auf 80-60°C abkühlen gelassen und
- der verbleibende Teil der Formel wird hinzugegeben, und man hält alles auf einer Temperatur von etwa 60-80°C, um eine cremige Lösung in Form eines Gels zu erhalten.
ii) Herstellung des Futterprodukts:
- Pflanzliche und/oder tierische Formulierungssubstanzen und Mineralsubstanz werden hinzugegeben, um eine formbare Mischung zu bilden;
iii) das Produkt wird gemessen / gegossen / geformt, um es in einer festen Form des Gegenstandes oder Tieres oder Gemüses oder Frucht zu erhalten, wie gewünscht.
iv) wobei das Verfahren weiter **dadurch gekennzeichnet ist, dass**:
o besagte Mineralsubstanz Ton ist, im Verhältnis von 0.5-1 8%pp;o besagte pflanzliche und/oder tierische Formulierungssubstanzen Konzentrate im Verhältnis von 1-10%pp sind.

2. Tierfutter erhältlich durch ein Verfahren laut Anspruch 1, **gekennzeichnet dadurch, dass** besagte Konservierungssubstanz Kaliumsorbat enthält.

3. Tierfutter erhalten durch ein Verfahren laut Anspruch 1, **gekennzeichnet dadurch, dass** besagte Konserviertingssubstanz Natriumproprionat enthält.

4. Tierfutter erhalten durch ein Verfahren laut Anspruch 1, **gekennzeichnet dadurch, dass** es die folgende Durchschnitts-Zusammensctzungsformulierung des Produkts enthält:
| Bestandteil | % |
|---|---|
| Prozess- und Stabilisierungswasser | q.s. auf 100 |
| Einfache und komplexe Kohlenhydrate | 35-65 |
| Gelbasis, und zwar Polysaccharid-Agar-Agar | 3-15 |
| Dehydriertes und/oder gefriergetrocknetes Obst | 0.01-10 |
| Dehydriertes und/oder gefriergetrocknetes Gemüse | 0.01-10 |
| Walnüsse, Haselnüsse und ähnliches | D.01-12 |
| Stärkehaltige und/oder ölige Samen | 0.01-15 |
| Andere Substanzen pflanzlichen Ursprungs, frisch oder | 0.01-8 |
| dehydriert | |
| Ton und andere mineralische Substanzen | 0.5-18 |
| Pflanzliche und/oder tierische Proteinkonzentrate | 1-10 |
| Pellettierte und/oder extrudierte und/oder körnige | 0.5-15 |
| Nahrungsmittel | |
| Konservierungsstoffe (EG-Zusatzstoffe) | 0.01-1 |
| Farbstoffe (EG-Zusatzstoffe) | 0.01-1 |
| Vitamin- und/oder Mineralstoffpremixe | 0.1-5 |
| Pflanzliche und/oder tierische Öle und Fette | 0.01-7 |
| Rohe und/oder gebackene und/oder geröstete Getreidesorten | 0.1-10 |
| und ihre Derivate | |
- und um die folgenden Parameter zu erhalten:
| Parameter | ME | Menge |
|---|---|---|
| Feuchtigkeit | % | 15-40 |
| Proteine | % | 1-30 |
| Fette | % | 1-15 |
| Mineralstoffe | % | 0.5-18 |
| Kohlenhydrate | % | 30-70 |

## Revendications

1. Méthode pour la production d'aliment pour animaux sous la forme de gel à base d'agar-agar solidifié dans un certain objet formé de nourriture **caractérisée en ce que** celle-ci comprend les étapes suivantes :
i) préparation du gel :
- un mélange de 3-15%pp d'agar-agar de polysaccharide à base de gel et 35-65%pp d'hydrate de carbone simple et complexe est préparé et de l'eau est ajoutée, le tout est mélangé pour obtenir une solution liquide,
- des additifs et des agents de conservation sont ajoutés et le tout est porté au moins au point d'ébullition, pendant au moins 1-3 minutes;
- la température est amenée à 80-60°C et
- le reste de la formule est ajouté, en gardant le tout à une température de 60-80°C environ pour obtenir une solution crémeuse sous forme de gel.
ii) préparation de l'aliment pour animaux :
- des substances de formulation végétales et/ou animales et substance minérale sont ajoutées pour former un mélange moulable ;
iii) le produit est mesuré / versé / moulé pour son obtention dans une forme solide de l'objet ou animal ou végétal ou fruit désiré.
iv) la méthode étant ultérieurement **caractérisée en ce que** :
• ladite substance minérale est de l'argile dans la proportion de 0.5-18%pp;
• lesdites substances de formulation végétale et/ou animale sont concentrées dans la proportion de 1-10%pp.

2. Aliment pour animaux qui peut être obtenu conformément à un procédé selon la revendication 1, **caractérisé en ce que** ladite substance de conservation inclut du sorbate de potassium.

3. Aliment pour animaux obtenu conformément à un procédé selon la revendication 1, **caractérisé en ce que** ladite substance de conservation inclut le propionate de sodium.

4. Aliment pour animaux obtenu conformément à un procédé selon la revendication 1, **caractérisé en ce que** celui-ci inclut la formulation de composition moyenne suivante du produit :
| Ingrédient | % |
|---|---|
| Eau de procédé et de stabilisation | q.s. à 100 |
| Glucides simples et complexes | 35-65 |
| Base de gel : agar-agar de polysaccharide | 3-15 |
| Fruit lyophilisé et/ou déshydraté | 0.01-10 |
| Légumes lyophilisés et/ou déshydratés | 0.01-10 |
| Noix, noisettes et similaire | 0.01-12 |
| Semences huileuses et/ou amylacées | 0.01-15 |
| Autres substances d'origine végétale, | 0.01-8 |
| déshydratées ou fraîches | |
| Argile et autres substances minérales | 0.5-18 |
| Concentrés de protéines végétales et/ou | 1-10 |
| animales | |
| Aliments granulés et/ou extrudées et/ou | 0.5-15 |
| cubés | |
| Agents de conservation (additifs CE) | 0.01-1 |
| Colorants (additifs CE) | 0.01-1 |
| Prémélanges minéraux et/ou de vitamines | 0.1-5 |
| Huiles et graisses végétales et/ou animales | 0.01-7 |
| Céréales grillées et/ou cuites et/ou crues | 0.1-10 |
| et leurs dérivés | |
- et afin d'obtenir les paramètres suivants :
| Paramètre | UM | Quantité |
|---|---|---|
| Humidité | % | 15-40 |
| Protéines | % | 1-30 |
| Graisses | % | 1-15 |
| Minéraux | % | 0.5-18 |
| Glucides | % | 30-70 |
